# EUROPEAN PATENT APPLICATION

(11) **EP 3 334 116 A1**
(43) Date of publication of application: **13.06.2018**
(21) Application number: 16306638.4
(22) Date of filing: 08.12.2016
(51) Int. Cl.: H04L 29/06, H04W 4/00, H04W 8/20, H04W 8/24

(54) **METHOD FOR OPTIMIZING THE POLLING EVENT OF A SECURE ELEMENT AND CORRESPONDING GATEWAY, SECURE ELEMENT, BASEBAND DEVICE AND OTA PLATFORM**

(71) Applicant: GEMALTO SA, 92190 Meudon (FR)
(72) Inventor: ROZAK-DRACCHIO, Lionel, 13881 GEMENOS cedex (FR); GRAVALLON, Sebastien, 13881 GEMENOS cedex (FR)

(57) **Abstract**

The invention concerns among others a method for optimizing the polling event of a secure element (30) cooperating with a terminal, the terminal comprising a baseband device (31), the method consisting in:
- Sending from a OTA platform (32) to a gateway (33) of a telecommunication network of an operator a polling date for the secure element (30);
- Sending from the gateway (33) to the baseband device (31), in a container of a PCO, the polling date;
- Sending from the baseband device (31) to the secure element (30) the polling date, in order that the secure element (30) polls the OTA platform (32) at the polling date.

## Description

The present invention relates to the field of telecommunications and more specifically to the remote administration of secure elements, such as UICCs (Universal Integrated Circuit Cards), eSE (embedded Secure Elements) or eUICCs (embedded UICCs) interacting with devices, for example portable devices such as telephones, smartphones, PDAs or tablets. Secure elements can also be in the form of circuits installed in machines, such as circuits in the area of M2M (Machine to Machine). They may not be physically connected to the terminals, but can communicate with them by a short-distance connection where a secure element is remotely located and communicates through a short distance channel with the terminal (Bluetooth or Wi-Fi for example).

Such administration of secure elements is typically performed by OTA (Over The Air) to update or install programs or data in secure elements. Administration of this type uses the HTTP (HyperText Transfer Protocol) protocol and is also called 'RFM' (Remote File Management) or 'RAM' (Remote Administration Management) by HTTP.

There are two ways to administrate secure elements:
A first way is to address the secure elements in a push mode for example using static secure elements lists. In the push mechanism, the OTA server takes the initiative to connect to the secure elements. A list of secure elements is built using selection criteria before the execution of the campaign and these secure elements are addressed during the campaign.

A second way is to realize campaign management over HTTP in pull mode with dynamic eligibility mechanism. The secure element takes the initiative to connect to the OTA server. In this solution, no target list is built but secure elements are defined through an eligibility criterion. Secure elements are polling regularly to contact the OTA platform and to check if there is a pending update for them. The eligibility criterion is evaluated when the secure element is polling, providing the benefit to allow reaching elements that were deployed after the beginning of the campaign.

There are a lot of advantages of using the polling mechanism like avoidance of target list management or ability to include new created or activated UICC dynamically. It ensures 100% success rate in MNO campaign that is not possible with the push mechanism. In polling mechanism, the secure element Admin agent is responsible for the connection to the OTA server managing the security though TLS and the accomplishment of the HTTP session. It represents the HTTP client application inside the secure element. The retry policy is not managed by the server but by the secure element admin agent that implements a specific retry schema.

Each secure element embeds Javacard applications which use the admin agent to poll one application server for checking periodically if there is some content to be delivered to the secure element (e.g. roaming file update, application upgrade, etc).

The frequency/periodicity of the polling is either pre-configured in the secure element or determined by the OTA server at the activation time based on distribution algorithm ensuring to not have all the secure elements polling at the same time. A typical polling period is 7 days: It means that every 7 days, the secure element initiates a polling request to the OTA server to check if there is some OTA updates.

However, when dealing with huge volumes of secure elements (Hundreds of millions in case of consumer database, or billions in case of M2M/loT database) the polling mechanism becomes problematic for the MNO because it impacts a lot of network element such HSS (Home Subscriber Server), AAA (authentication, authorization and accounting), PCRF (policy and charging rules function) and at the end the phenomenon is very expensive.

Even if there are many advantages of using the polling mechanism, one of the main drawback is that the secure elements can poll the OTA server at the expected polling dates but the OTA server does not have any updates for these secure elements: This behavior is known as 'empty polling'. Each polling consumes a lot of resources from network element perspective and is seen as expensive mechanism for the MNO.

It becomes therefore mandatory to have a mechanism optimizing the number of polling and especially the ratio between 'empty polling' (useless polling) and 'non-empty' polling (useful polling).

For that purpose, the present invention proposes to use an existent message sent in any cases to the secure elements in order to optimize the number of polling.

In this respect, the invention proposes a method for optimizing the polling event of a secure element cooperating with a terminal, the terminal comprising a baseband device, the method consisting in:
- Sending from a OTA platform to a gateway of a telecommunication network of an operator a polling date for the secure element;
- Sending from the gateway to the baseband device, in a container of a PCO, this polling date;
- Sending from the baseband device to the secure element the polling date, in order that the secure element polls the OTA platform at this polling date.

Advantageously, the OTA platform sends the polling date to the gateway at the request of the gateway.

Preferably, the gateway requests the polling date from the OTA platform when it receives from the baseband device a PDN connectivity request message.

The invention also concerns a gateway of a telecommunication network comprising at least a microprocessor, the microprocessor being configured to send to a baseband device of a terminal, in a container of a PCO, a polling date of a secure element cooperating with the terminal.

The gateway is preferably configured for sending a message requesting a polling date of the secure element to an OTA platform and for receiving from the OTA platform a message containing the polling date.

The invention also concerns a secure element cooperating with a terminal, the secure element being configured for receiving from the baseband device of the terminal a polling date contained in a container of a PCO and for polling an OTA platform at this polling date.

The invention also concerns a baseband device of a terminal, this baseband device being configured for receiving a PCO comprising containers, one of the containers containing a polling date, and for extracting the polling date from the one container and transmitting the polling date to a secure element cooperating with the terminal.

Finally, the invention proposes an OTA platform configured for:
- receiving from a gateway of a telecommunication network a request of a polling date of a secure element;
- sending this polling date to the gateway.

In a first embodiment, the polling date is computed when the request is received by the OTA platform.

In a second embodiment, the polling date is pre-computed.

The present invention will be better understand by reading the following description of a preferred embodiment of the invention in regard of the figures that represent:
- Figure 1 the structure of a component called PCO (Protocol Configuration Options) of a NAS message;
- Figure 2 an example of the content of container IDs;
- Figure 3 a workflow showing the method according to the invention.

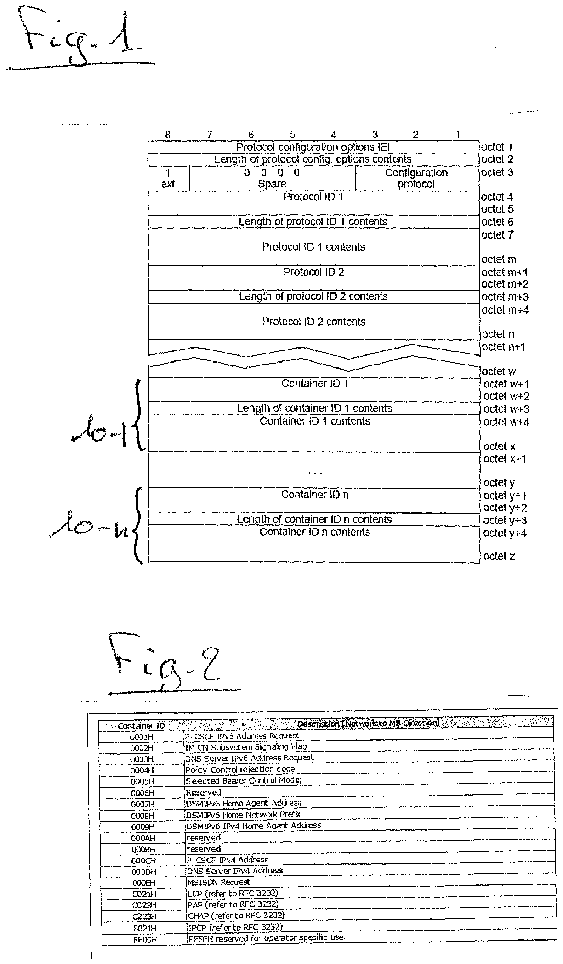

Figure 1 shows the structure of a component called PCO (Protocol Configuration Options) of a NAS message.

This structure is defined in the Technical Specification 3GPP TS 24.008 of July 2009.

The purpose of the PCO is to provide additional optional information about the destination network that the UE (User Equipment) is connecting to. For example, when a terminal connects to the Internet it will be given an IP address and it will be given a PCO that includes the default gateway IP address, the DNS server address, etc. All of these additional type of information are given in the PCO.

Here multiple container IDs are represented, referenced 10-1 to 10-n. Each container ID contains a reference (one byte), the length of the data it contains (one byte) and a payload containing these data.

Figure 2 represents an example of the content of container IDs.

In this figure it can be seen that container IDs FF00H to FFFFH are reserved for operators' (MNOs) specific use.

The invention proposes to use such a reserved container ID for transmitting to secure elements their polling dates.

It is known that during an initial LTE attachment process of a terminal to the network or during any APN (Access Point Name) assignment (default APN, IMS APN, internet APN...), PCO NAS messages (NAS standing for Network Authentication Server) are exchanged between the terminal and the MME/GGSN (Mobility Management Entity / Gateway GPRS Support Node) through following messages:
- PDN Connectivity Request (PDN stands for Public Data Network)
- Activate Default EPS Bearer Context Request (EPS stands for Evolved Packet System)
- Activate Default EPS Bearer Context Accept

In addition of the initial attachment, PCO is also sent because of periodically re-registration of the PDP (Packet Data Protocol) context or in case of PDP update: Technical specification 3GPP TS 24.008 Core network protocols, stage 3, precises: "The MS and the GGSN may communicate parameters by means of the PCO (protocol configuration options) information element when activating, modifying or deactivating a PDP context". The protocol configuration options information element is coded as shown in figure 10.5.136/3GPP TS 24.008 and table 10.5.154/3GPP TS 24.008 Stage 3 (3GPP TS 24.008 version 8.6.0 Release 8) as shown in figures 1 and 2.

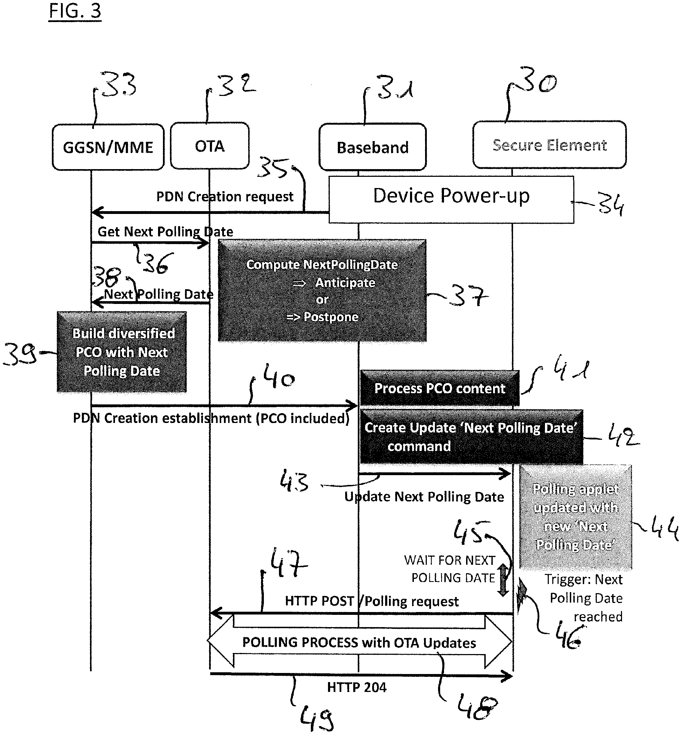

Figure 3 represents a workflow showing the method according to the invention.

Four elements are here represented: A secure element 30 communicating with a baseband device 31 (modem), an OTA platform 32 and a gateway 33 of a telecommunication network. The secure element 30 and the baseband 31 are comprised in a telecommunication terminal and the gateway is, in a LTE context, a GGSN/MME.

At the occurrence of an event 34, for example when the terminal is powered up, the secure element 30 sends through the baseband device 31 a PDN creation request message (step 35) to the GGSN/MME 33. The GGSN/MME 33 gateway comprises at least a microprocessor configured for sending a message (step 36) requesting a polling date of this secure element 30 to the OTA platform 32. The OTA platform then computes the next polling date suitable for this secure element 30 at step 37. For example: If no OTA updates are pending for the secure element 30, the OTA platform 32 can do nothing or postpone to the next polling period (e.g. 7 days later). If critical OTA updates are pending then the server can updade the next polling date to ask the secure element 30 to poll as soon as possible.

The next polling date is then transmitted to the GGSN/MME at step 38.

The GGSN/MME then builts at step 39 a diversified PCO comprising the next polling date. This PCO is sent at step 40 in a PDN message to the baseband device 31 of the terminal. The baseband device 31 then processes the PCO content (step 41), retrieves the next polling date and creates a command (step 42) for updating the next polling date. This command is transmitted to the secure element 30 at step 43.

The secure element 30 comprises a polling applet that is updated with the new next polling date at step 44. The secure element 30 then waits (step 45) for the next polling date, for example which day and at which time. When this polling date is reached (step 46), the polling applet inititates a polling request to the OTA platform 32 (a HTTP POST/Polling request is sent by the secure element 30 to the OTA platform 32 at step 47).

The OTA platform then sends (step 48) updates to the secure element 30 after having established a secure channel. The process ends when a HTTP 204 message is sent (step 49) from the OTA platform 32 to the secure element 30 (the platform 32 has successfully fulfilled the request and there is no additional content to send).

The invention also proposes a gateway 33 of a telecommunication network comprising at least a microprocessor, this microprocessor being configured to send to a baseband device 31 of a terminal, in a container of a PCO, a polling date of a secure element 30 cooperating with this terminal.

The invention also proposes a secure element 30 cooperating with a terminal, this secure element 30 being configured for receiving from the baseband device 31 of this terminal a polling date comprised in a container of a PCO and for polling an OTA platform 32 at this polling date.

The invention also proposes a baseband device 31 of a terminal, this baseband device 31 being configured for receiving a PCO comprising containers, one of this containers containing a polling date, and for extracting this polling date from this one container and transmitting this polling date to a secure element 30 cooperating with this terminal. The baseband device 31 parses the received PCO and when it detects a given container, it executes an action. In the scope of the invention, when detecting a polling date comprised in a reserved container of a PCO, the OS (Operating System) of the baseband device 31 extracts the polling date and sends it to the secure element 30.

The OS of the baseband device 31 can be updated via OTA if it does not support natively the extraction of the polling date comprised in a given container of the PCO.

The invention also proposes a OTA platform 32 configured for:
- receiving from a gateway 33 of a telecommunication network a request of a polling date of a secure element 30;
- sending this polling date to the gateway 33.

The polling date can be computed when the request is received by the OTA platform or can also be pre-computed.

As explained above, the invention consists in adding a new container ID dedicated to the next polling date, this container ID being a container reserved for operator's specific use.

The invention allows to keep the perfect distribution of polling events thanks to the algorithm implemented by the OTA server, eliminates the useless and expensive empty polling (polling without OTA Updates) and does not incur additional traffic to eliminate these empty polling since an existing messaging protocol to carry the information is employed.

## Claims

1. Method for optimizing the polling event of a secure element (30) cooperating with a terminal, said terminal comprising a baseband device (31), said method consisting in:
- Sending from a OTA platform (32) to a gateway (33) of a telecommunication network of an operator a polling date for said secure element (30);
- Sending from said gateway (33) to said baseband device (31), in a container of a PCO, said polling date;
- Sending from said baseband device (31) to said secure element (30) said polling date, in order that said secure element (30) polls said OTA platform (32) at said polling date.

2. Method according to claim 1, wherein said OTA platform (32) sends said polling date to said gateway (33) at the request of said gateway (33).

3. Method according to claim 2, wherein said gateway (33) requests said polling date from said OTA platform (32) when it receives from said baseband device (31) a PDN connectivity request message.

4. Gateway (33) of a telecommunication network comprising at least a microprocessor, said microprocessor being configured to send to a baseband device (31) of a terminal, in a container of a PCO, a polling date of a secure element (30) cooperating with said terminal.

5. Gateway (33) according to claim 4, wherein said gateway (33) is configured for sending a message requesting a polling date of said secure element (30) to an OTA platform (32) and for receiving from said OTA platform (32) a message containing said polling date.

6. Secure element (30) cooperating with a terminal, said secure element (30) being configured for receiving from the baseband device (31) of said terminal a polling date contained in a container of a PCO and for polling an OTA platform (32) at said polling date.

7. Baseband device (31) of a terminal, said baseband device (31) being configured for receiving a PCO comprising containers, one of said containers containing a polling date, and for extracting said polling date from said one container and transmitting said polling date to a secure element (30) cooperating with said terminal.

8. OTA platform (32) configured for:
- receiving from a gateway (33) of a telecommunication network a request of a polling date of a secure element (30);
- sending said polling date to said gateway (33).

9. OTA platform according to claim 8, wherein said polling date is computed when said request is received by said OTA platform.

10. OTA platform according to claim 8, wherein said polling date is pre-computed.
